# EUROPÄISCHE PATENTSCHRIFT

(11) **EP 1 983 631 B1**
(45) Veröffentlichungstag und Bekanntmachung des Hinweises auf die Patenterteilung: **01.02.2012**
(21) Anmeldenummer: 08005231.9
(22) Anmeldetag: 20.03.2008
(51) Int. Cl.: H02H 3/33

(54) **Elektrischer Stromkreis**
Electrical circuit
Circuit électrique

(30) Priorität: 20.04.2007 DE 102007018814
(43) Veröffentlichungstag der Anmeldung: 22.10.2008
(73) Patentinhaber: Consul Werkstattausrüstung GmbH, 58553 Halver (DE)
(72) Erfinder: Nippel, Walter, 58515 Lüdenscheid (DE); Abel, Dirk, 58339 Breckerfeld (DE)
(74) Vertreter: Berkenbrink, Kai-Oliver

(56) Entgegenhaltungen:
- DE-A1- 1 538 487
- DE-U1- 9 314 411

## Beschreibung

Die Erfindung betrifft einen elektrischen Stromkreis.

Elektrische Stromkreise dienen zur Leitung von elektrischem Strom an elektrische Verbraucher, die an den elektrischen Stromkreis angeschlossen sind.

Insbesondere dann, wenn diese elektrischen Verbraucher, beispielsweise Elektromotoren, zum Antreiben von Maschinen dienen, sind Sicherheitsvorkehrungen zur Vermeidung von Personenschäden durch den elektrischen Verbraucher und die Maschine zu treffen. Welche konkreten Sicherheitsvorkehrungen zu treffen sind, ist vielfach gesetzlich normiert. Soweit die Maschinenrichtlinie (Richtlinie 98/37/EG beziehungsweise deren Neufassung gemäß Richtlinie 2006/42/EG) einschlägig ist, schreibt diese beispielsweise das redundante Vorhandensein von sicherheitsbezogenen Teilen von Steuerungen der Maschine vor.

Eine Ausnahme gilt für sicherheitstechnisch bewährte Bauteile.

Obgleich Schütze, also elektromagnetisch betätigbare Schalter, solch sicherheitstechnisch bewährte Bauteile im Sinne der Maschinenrichtlinie darstellen, ist auch für Schütze nicht immer eine fehlerfreie Funktion gewährleistet. Beispielsweise kann ein Schaltkontakt des Schütz geschlossen bleiben, obwohl kein Erregerstrom durch die Magnetspule des Schütz fließt.

Zur Erhöhung der Sicherheit können Schütze redundant vorgesehen sein. Eine solche Maßnahme ist regelmäßig jedoch mit hohem Aufwand und erheblichen Kosten verbunden, da ein Schütz ein verhältnismäßig teures Bauteil darstellt. Zudem können Schütze an Maschinen mehrfach vorhanden sein, so dass dann jedes Schütz redundant ausgeführt sein müsste.

Der Erfindung liegt daher die Aufgabe zugrunde, hier eine Verbesserung zu schaffen.

DE 1538487 A1 offenbart eine Vorrichtung zur Notausschaltung von Fehlerstromschutzschaltern in mit nicht geerdeten Netzen verbundenen Anlagen, bei der durch Betätigung eines Schalters ein künstlicher kapazitiver Unsymmetriestrom hervorgerufen wird, der größer ist als der Fehlerstrom des Schutzschalters.

Insbesondere liegt der Erfindung die Aufgabe zugrunde, einen elektrischen Stromkreis mit wenigstens einem daran angeschlossenen elektrischen Verbraucher, der über ein Schütz einschaltbar ist, zur Verfügung zu stellen, wobei die Gefahr eines Personenschadens durch den elektrischen Verbraucher oder die durch diesen angetriebene Maschine im Falle einer Fehlfunktion des Schütz minimiert ist, auch wenn der fehlerhafte Schütz nicht redundant vorhanden ist.

Zur Lösung dieser Aufgabe schlägt die Erfindung einen elektrischen Stromkreis mit folgenden Merkmalen vor:
einem Fehlerstromschutzschalter;
einem elektrischen Verbraucher;
einem Schütz, durch den der elektrische Verbraucher einschaltbar und ausschaltbar ist;
einer Ableitung, über die elektrischer Strom aus dem elektrischen Stromkreis ableitbar ist;
einer Schalteinrichtung, durch die die Ableitung schließbar und unterbrechbar ist, wobei
die Schalteinrichtung in Abhängigkeit von den Zuständen des Schütz sowie des elektrischen Verbrauchers steuerbar ist.

Die Erfindung beruht auf der Grundidee, einen Fehlerstromschutzschalter des elektrischen Stromkreises im Falle einer Fehlfunktion des Schütz gezielt zu aktivieren, um die Stromversorgung zum elektrischen Verbraucher zu unterbrechen.

Fehlerstromschutzschalter, auch FI-Schalter genannt, sind Schutzeinrichtungen, die an einen Stromkreis angeschlossen sind und die Stromstärke in der Hinleitung des Stromkreises mit der Stromstärke in der Rückleitung des Stromkreises vergleichen. Stellt der Fehlerstromschutzschalter dabei eine Stromdifferenz in einer definierten Höhe fest (Auslösestromstärke, Bemessungsdifferenzstrom), führt dies zur Aktivierung beziehungsweise Auslösung des Fehlerstromschutzschalters und damit zur Abschaltung des Stromkreises vom Versorgungsnetz beziehungsweise Stromnetz. Fehlerstromschutzschalter sind üblicherweise im Sicherungskasten, teilweise auch unmittelbar an einem zu überwachenden Aggregat installiert.

Der wesentliche Vorteil der erfindungsgemäßen Verwendung des Fehlerstromschutzschalters als Sicherheitsabschaltglied zum Abschalten des elektrischen Stromkreises liegt insbesondere darin, dass der Fehlerstromschutzschalter regelmäßig bereits an den zu überwachenden Stromkreis angeschlossen ist beziehungsweise an diesen angeschlossen sein muss und daher insoweit kein zusätzliches Sicherheitsbauteil installiert werden muss. Ein weiterer Vorteil der Verwendung des Fehlerstromschutzschalters als Sicherheitsabschaltglied liegt darin, dass es sich bei diesem Bauteil um ein sicherheitstechnisch bewährtes Bauteil handelt, über den der Stromkreis sicher abgeschaltet werden kann. Schließlich liegt ein Vorteil der Verwendung des Fehlerstromschutzschalters als Sicherheitsabschaltglied darin, dass dieser als Sicherheitsbauteil für sämtliche Schütze des überwachten Stromkreises dienen kann und daher nicht mehrfach für einen Stromkreis installiert werden muss.

Zur Aktivierung beziehungsweise zum Auslösen des Fehlerstromschutzschalters ist im anmeldungsgemäßen elektrischen Stromkreis bei einer Fehlfunktion des Schütz, durch den ein elektrischer Verbraucher des elektrischen Stromkreises ein- und ausschaltbar ist, ein Fehlerstrom erzeugbar, der aus dem elektrischen Stromkreis ableitbar ist. Der Fehlerstromschutzschalter des elektrischen Stromkreises registriert diesen Fehlerstrom und löst aus beziehungsweise schaltet den Stromkreis vom Versorgungsnetz ab. Der elektrische Verbraucher des Stromkreises ist dadurch von der Stromversorgung abgetrennt, wodurch die Gefahr eines Personenschadens durch den elektrischen Verbraucher beziehungsweise die durch den elektrischen Verbraucher angetriebene Maschine minimiert ist.

Ein Fehlerstrom ist bei dem anmeldungsgemäßen Stromkreis dadurch künstlich erzeugbar, dass eine Ableitung vorgesehen ist, über die elektrischer Strom aus dem elektrischen Stromkreis ableitbar ist. Diese Ableitung, über die bei einer Fehlfunktion des Schütz ein elektrischer Fehlerstrom aus dem elektrischen Stromkreis ableitbar ist, ist damit ein dem erfindungsgemäßen Stromkreis immanentes Element. Damit unterscheidet sich der - erfindungsgemäße Stromkreis nachhaltig von mit einem Fehlerstromschutzschalter ausgerüsteten Stromkreisen nach dem Stand der Technik, bei denen der Fehlerstrom über einen "unbeabsichtigten" Weg, beispielsweise den Körper einer Person, die ein mit dem Stromkreis elektrisch verbundenes Element des Stromkreises berührt, den überwachten Stromkreis verlässt. Ein Vorteil der zur Fehlerstromableitung vorgesehenen Ableitung liegt dabei insbesondere auch darin, dass die über die Ableitung ableitbare elektrische Stromstärke einstellbar ist. Dabei kann insbesondere vorgesehen sein, dass die über die Ableitung ableitbare Stromstärke über der Auslösestromstärke des Fehlerstromschutzschalters liegt, bevorzugt über 30 mA. Mit anderen Worten: Im Falle einer Fehlfunktion des Schütz ist die über die Ableitung ableitbare Stromstärke so hoch, dass der Fehlerstromschutzschalter diesen Fehlerstrom registriert und auslöst. Bevorzugt liegt die Auslösestromstärke des Fehlerschutzschalters bei 30mA, was der vorgeschriebenen Auslösestromstärke zum Personenschutz bei Fehlerstromschutzschaltern entspricht. Zur Einstellung der Höhe der über die Ableitung ableitbaren Stromstärke weist diese bevorzugt einen Widerstand definierter Höhe auf.

Stromkreisseitig ist die Ableitung bevorzugt auf der dem Versorgungsnetz beziehungsweise Stromnetz zugewandten Seite des Schütz und der dem elektrischen Verbraucher zugewandten Seite des Fehlerstromschutzschalters mit dem Stromkreis verbunden.

Die Ableitung liegt bevorzugt auf elektrischem Nullpotential (Erde, Masse), kann also beispielsweise mit einem Schutzleiter verbunden sein.

Bekanntermaßen ist ein Schütz ein elektromagnetisch betätigbarer Schalter mit einer Magnetspule, durch deren magnetische Anziehung ein oder mehrere Schalter zum Schließen und Öffnen von Kontakten betätigbar sind. Die Magnetspule ist an einen Erregerstromkreis, auch Steuerstromkreis genannt, angeschlossen. Der Erregerstromkreis ist über einen Betätigungsschalter schließbar. Durch den geschlossenen Erregerstromkreis und damit auch durch die Magnetspule des Schütz ist ein Erregerstrom fließbar. Solange der Erregerstrom durch die Magnetspule des Schütz fließt, werden die Schalter des Schütz durch die Magnetspule angezogen und schließen den Stromkreis (auch "Hauptstromkreis" oder "Leistungsstromkreis" genannt), an den der durch das Schütz einschaltbare elektrische Verbraucher angeschlossen ist.

Eine Fehlfunktion des Schütz kann beispielsweise darin bestehen, dass die Schalter des Schütz in der durch die Magnetspule des Schütz angezogenen Stellung verharren, obwohl kein Erregerstrom durch die Magnetspule fließt, der Betätigungsschalter also inaktiviert ist (auch "klemmender Schütz" oder "verschweißte Kontakte" genannt).

Dies führt zu einem gefährlichen Zustand des elektrischen Verbrauchers beziehungsweise der durch diesen elektrischen Verbraucher angetriebenen Maschine, da der elektrische Verbraucher über den elektrischen Stromkreis weiterhin mit elektrischem Strom versorgt wird, obwohl sich das Schütz in einem ausgeschalteten Zustand befindet.

Um auf eine solche Fehlfunktion des Schütz hin die Abschaltung des Stromkreises beziehungsweise des daran angeschlossenen elektrischen Verbrauchers erreichen zu können, ist beim erfindungsgemäßen Stromkreis die Ableitung, über die ein Fehlerstrom aus dem Stromkreis ableitbar ist, durch die Schalteinrichtung schließbar, wobei die Schalteinrichtung in Abhängigkeit von den Zuständen des Schütz sowie des elektrischen Verbrauchers steuerbar ist.

Besonders bevorzugt ist die Schalteinrichtung derart steuerbar, dass sie die Ableitung bei einer Fehlfunktion des Schütz schließt, insbesondere einer gefährlichen Fehlfunktion des Schütz. Insbesondere ist die Schalteinrichtung derart steuerbar, dass sie die Ableitung schließt, wenn sich der Schütz im inaktivierten Zustand befindet und der elektrische Verbraucher gleichzeitig im aktivierten Zustand befindet, da in diesem Fall eine Fehlfunktion des Schütz vorliegt.

Entsprechend ist die Schalteinrichtung bevorzugt derart steuerbar, dass sie die Ableitung nicht schließt, wenn keine Fehlfunktion des Schütz vorliegt. Dies ist der Fall, wenn sich Schütz und elektrischer Verbraucher gleichzeitig jeweils im aktivierten oder inaktivierten Zustand befinden. Befindet sich der Schütz im aktivierten, der elektrische Verbraucher aber im inaktivierten Zustand, liegt zwar eine Fehlfunktion des Schütz vor, jedoch keine gefährliche Fehlfunktion, so dass vorgesehen sein kann, dass die Schalteinrichtung derart steuerbar ist, dass sie die Ableitung bei dieser Fehlfunktion nicht schließt.

Der Schütz befindet sich im inaktivierten Zustand, wenn sich der Betätigungsschalter des Schütz in der ausgeschalteten Stellung befindet beziehungsweise befinden soll. Mit "Betätigungsschalter" wird anmeldungsgemäß jedes in Frage kommende Schaltmittel zum ein- und ausschalten des Schütz bezeichnet, beispielsweise jedes handbetätigbare Betätigungsglied, beispielsweise ein Druckknopf oder ein Schalter, oder beispielsweise auch eine elektrische Steuerung.

Der elektrische Verbraucher befindet sich im aktivierten Zustand, wenn er vom Stromkreis mit elektrischem Strom versorgbar ist beziehungsweise versorgt wird, also entsprechend stromdurchflossen ist.

Nach einer Ausführungsform ist die Schalteinrichtung derart steuerbar, dass sie die Ableitung nur dann schließt, wenn sich für einen festgelegten Zeitraum die Zeiträume überschneiden, in denen sich der Schütz im inaktivierten Zustand befindet und der elektrische Verbraucher im aktivierten Zustand befindet. Hierdurch kann den im Schaltkreis etwaig auftretenden Schaltverzögerungen, Kontaktzeiten und dergleichen Rechnung getragen werden. Dabei kann insbesondere vorgesehen sein, dass der festgelegte Zeitraum größer ist als die Schaltverzögerung des Schütz. Nach einer Ausführungsform liegt dieser festgelegte Zeitraum bei 1, 2, 5 oder 10 Sekunden.

Grundsätzlich können die Zustände von Schütz und elektrischem Verbraucher beliebige Zustände sein.

Hinsichtlich des Schütz können die Zustände insbesondere solche Zustände sein, die darauf schließen lassen, ob der Schütz aktiviert (eingeschaltet) oder inaktiviert (ausgeschaltet) ist.

Nach einer Ausführungsform sind die Zustände des Schütz die Schaltstellungen des Betätigungsschalters des Schütz. Beispielsweise können hierzu am Betätigungsschalter dessen Schaltstellungen ("eingeschaltete Stellung" beziehungsweise "ausgeschaltete Stellung") erfassbar sein, beispielsweise über elektrische, mechanische oder optische Erfassungsmittel.

Nach einer alternativen Ausführungsform sind die Zustände des Schütz die elektrischen Stromzustände oder Spannungszustände im Erregerstromkreis des Schütz.

Nach einer weiteren Ausführungsform sind die Zustände des Schütz die elektrischen Spannungszustände an der Magnetspule des Schütz.

Hinsichtlich des elektrischen Verbrauchers können die Zustände insbesondere solche Zustände sein, die darauf schließen lassen, ob der elektrischen Verbraucher mit Strom versorgt (eingeschaltet) oder nicht mit Strom versorgt (ausgeschaltet) ist.

Nach einer Ausführungsform sind die Zustände des elektrischen Verbrauchers die Stellungen oder Stellungsänderungen des elektrischen Verbrauchers. Bestimmte Stellungen oder Stellungsänderungen nimmt der elektrische Verbrauchers in Abhängigkeit von der Stromversorgung ein. Die Stellungen oder Stellungsänderungen des elektrischen Verbrauchers lassen daher "mittelbar" darauf schließen, dass der elektrische Verbraucher mit Strom versorgt ist. Beispielsweise ist bei einem Elektromotor als elektrischem Verbraucher seine Drehung eine Stellungsänderung. Beispielsweise können am elektrische Verbraucher dessen Stellungen oder Stellungsänderungen erfassbar sein, beispielsweise über elektrische, mechanische oder optische Erfassungsmittel.

Der Zustand des elektrischen Verbrauchers ist beispielsweise auch durch Erfassung seiner Wirkung mittelbar erfassbar. Diese Wirkung des elektrischen Verbrauchers ist die Wirkung, die er auf aufgrund seiner Versorgung mit elektrischem Strom auf seine Umgebung ausübt, beispielsweise also die Bewegung einer Maschine durch den elektrischen Verbraucher oder beispielsweise sonstige mechanische, optische, akustische oder elektrische Einwirkungen auf die Umgebung. Beispielsweise kann also zur Erfassung des Zustandes des elektrischen Verbrauchers der Zustand der Maschine, die durch den elektrischen Verbraucher angetrieben wird, erfasst werden.

Nach einer anderen Ausführungsform sind die Zustände des elektrischen Verbrauchers die elektrischen Stromzustände in den elektrischen Leitungen zum elektrischen Verbraucher oder im elektrischen Verbraucher.

Nach einer weiteren Ausführungsform sind die Zustände des elektrischen Verbrauchers die elektrischen Spannungszustände in den elektrischen Leitungen zum elektrischen Verbraucher und/oder im elektrischen Verbraucher.

Die Zustände des Schütz einerseits sowie des elektrischen Verbrauchers andererseits sind beispielsweise durch geeignete Erfassungsmittel beziehungsweise Messvorrichtungen erfassbar. Die erfassten beziehungsweise gemessenen Zustände können über Übertragungsmittel an die Schalteinrichtung beziehungsweise eine Steuerung zur Steuerung der Schalteinrichtung übertragbar sein.

Es können auch jeweils mehrere der Zustände von Schütz und elektrischem Verbraucher gleichzeitig erfassbar sein. Hierdurch ist die Sicherheit erhöhbar.

Nach einer Ausführungsform ist die Schalteinrichtung durch eine Steuerung, gegebenenfalls auch eine separate Steuerung steuerbar. Diese Steuerung kann eine beliebige Steuerung nach dem Stand der Technik sein, die zur Steuerung elektrischer Schaltkreise geeignet ist, beispielsweise eine elektrische oder eine elektronische Steuerung, beispielsweise eine Logikschaltung, eine SPS (Speicher Programmierbare Steuerung), beispielsweise ein Microcontroller, oder ein A/D-Wandler (Analog/Digital-Wandler). Die Steuerung kann insbesondere ausgebildet sein zum Empfangen von Messdaten (hier insbesondere betreffend die Zustände von Schütz und elektrischem Verbraucher), deren Verarbeitung und zur Abgabe von Steuersignalen an die Schalteinrichtung in Abhängigkeit der empfangenen und verarbeiteten Messdaten.

Es ist insbesondere Vorgesehen, dass die Ableitung im Regelbetrieb, wenn also keine Fehlfunktion des Schütz vorliegt, geöffnet beziehungsweise durch die Schalteinrichtung unterbrochen ist.

Selbstverständlich kann der anmeldungsgemäße Stromreis mehrere Schütze, mehrere elektrische Verbraucher oder insbesondere mehrere jeweils über ein Schütz ein- und ausschaltbare elektrische Verbraucher aufweisen. Mit dem anmeldungsgemäßen Stromkreis kann eine Sicherheitsabschaltung all dieser elektrischen Verbraucher im anmeldungsgemäß konfektionierten elektrischen Stromkreis erfolgen beziehungsweise kann eine Sicherheitsabschaltung all dieser elektrischen Verbraucher durch nur eine einzige anmeldungsgemäß gestaltete Ableitung im elektrischen Stromkreis erfolgen.

Der elektrische Verbraucher kann beispielsweise ein Elektromotor sein, der beispielsweise zum Antreiben einer Maschine dient.

Der erfindungsgemäße elektrische Stromkreis kann grundsätzlich für beliebige Elektroinstallationen eingesetzt werden. Bevorzugt kann der erfindungsgemäße elektrische Stromkreis für Maschinen vorgesehen sein, die zu ihrem Antrieb mit Elektromotoren als elektrischem Verbraucher versehen sind, beispielsweise Hebevorrichtungen, wie etwa Hebebühnen, Kräne oder elektrisch heb- und senkbare Tore.

Gegenstand der Anmeldung ist auch eine Maschine, die durch einen elektrischen Verbraucher antreibbar ist, die mit einem wie vorstehend beschriebenen elektrischem Stromkreis verbunden ist.

Sämtliche der vorgenannten Merkmale des erfindungsgemäßen elektrischen Stromkreises können beliebig miteinander kombiniert werden.

In der nachfolgenden Figurenbeschreibung wird ein stark schematisiertes Ausführungsbeispiel eines erfindungsgemäßen elektrischen Stromkreises näher erläutert.

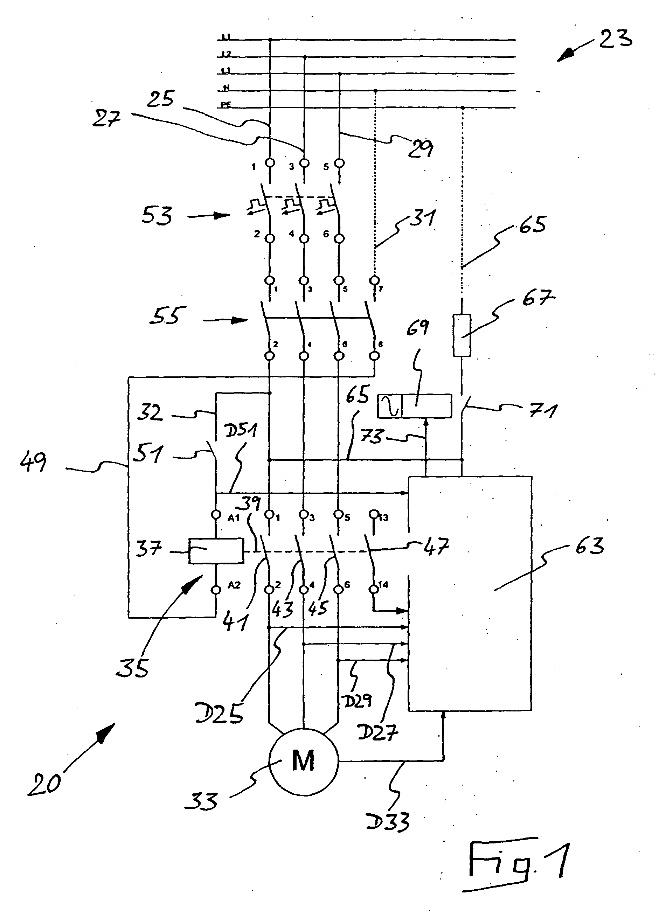

Dabei zeigt
- Figur 1: ein elektrisches Schaltbild eines elektrischen Stromkreises mit einem Elektromotor als elektrischem Verbraucher.

Der elektrische Stromkreis 20 nach Figur 1 wird über ein Versorgungsnetz 23 in Form eines Drehstromnetzes mit elektrischem Strom versorgt. Das Versorgungsnetz 23 weist die drei Phasen L1, L2 und L3, den Neutralleiter N sowie den Schutzleiter PE auf.

Über drei Leitungen 25, 27 und 29, die jeweils mit einer der Phasen L1, L2 und L3 des Versorgungsnetzes 23 verbunden sind, ist ein elektrischer Verbraucher in Form eines Elektromotors 33 an das Versorgungsnetz 23 angeschlossen.

Der Elektromotor 33 ist über ein Schütz 35 ein- und ausschaltbar. Der Schütz 35 weist eine Magnetspule 37, einen Zuganker 39 sowie vier darüber betätigbare Schalter 41, 43, 45 und 47 auf. Durch den Schalter 41 ist die Leitung 25, durch den Schalter 43 die Leitung 27 und durch den Schalter 45 die Leitung 29 jeweils schließbar und unterbrechbar. Der Schalter 47 dient zum Schließen und Öffnen eines Hilfskontaktes 13-14 des Schütz 35.

Der Erregerstromkreis 49 zum Erregen der Magnetspule 37 des Schütz 35 ist zum einen mit der Leitung 25 und hierüber mit der Phase L1 des Versorgungsnetzes 23 und zum anderen über einen separaten Leitungsabschnitt 31 mit dem Neutralleiter N des Versorgungsnetzes 23 verbunden. Der Leitungsabschnitt des Erregerstromkreises 49 zwischen Magnetspule 37 und Leitung 25 ist mit dem Bezugszeichen 32 bezeichnet. An diesem Leitungsabschnitt ist ein Betätigungsschalter 51 angeordnet, über den der Erregerstromkreis 49 schließbar und unterbrechbar ist.

Die Leitungen 25, 27 und 29 sind durch Sicherungen 53 schließbar und unterbrechbar.

Auf der dem Elektromotor 33 zugewandten Seite der Sicherungen 53 weist der Stromkreis 20 einen Fehlerstromschutzschalter 55 auf. Durch den Fehlerstromschutzschalter 55 sind die drei Leitungen 25, 27 und 29 sowie die Leitung 31 schließbar und unterbrechbar.

Durch den Schütz 35 sind die drei Leitungen 25, 27 und 29 auf der Verbraucherseite des Fehlerstromschutzschalters 55 schließbar und unterbrechbar.

Die Leitung 32 des Erregerstromkreises 49 ist an dem Leitungsabschnitt der Leitung 25, der zwischen der Verbraucherseite des Fehlerstromschutzschalters 55 und der Versorgerseite des Schütz 35 liegt, mit der Leitung 25 verbunden.

Gemäß üblicher Bezeichnung sind die zum Stromnetz beziehungsweise Versorgungsnetz 23 weisenden Kontakte bei den Sicherungen 53, dem Fehlerstromschutzschalter 55 sowie beim Schütz 35 mit ungeraden Ziffern (1; 3; 5; 7) bezeichnet und die zum Verbraucher 33 weisenden Kontakte mit geraden Ziffern (2; 4; 6; 8). Beim Hilfskontakt des Schütz 35 ist der zum Versorgungsnetz 23 weisende Kontakt mit der Ziffer 13 und der zum Verbraucher 33 weisende Kontakt mit der Ziffer 14 versehen. Die Kontakte 13-14 sind über den Schalter 47 schließbar und unterbrechbar.

Über eine Ableitung 65 ist elektrischer Strom aus dem elektrischen Stromkreis 20 ableitbar. Hierzu ist die Ableitung 65 zum einen mit der Leitung 25 und zum anderen mit dem Schutzleiter PE des Versorgungsnetzes 23 verbunden. Die Ableitung 65 ist an dem Leitungsabschnitt der Leitung 25 mit dieser verbunden, der zwischen der Verbraucherseite des Fehlerstromschutzschalters 55 und der Versorgerseite des Schütz 35 liegt. Die Ableitung 65 weist einen Widerstand 67 auf. Über eine Schalteinrichtung in Form eines Relais 69 ist die Ableitung 65 schließbar oder unterbrechbar. Der Relaiskontaktschalter des Relais 69 ist mit dem Bezugszeichen 71 bezeichnet.

Das Relais 69 ist mittels einer Steuerung 63 steuerbar. Hierzu ist von der Steuerung 63 ein Signal, angedeutet durch den Pfeil 73, zum Schließen der Ableitung 65 an das Relais 69 abgebbar.

Die Steuerung 63 ist derart eingerichtet, dass sie das Signal 73 zum Schließen der Ableitung 65 dann an das Relais 69 abgibt, wenn sich für einen festgelegten Zeitraum von mehr als 1 Sekunde die Zeiträume überschneiden, in denen sich der Schütz 35 im inaktivierten Zustand befindet und der Elektromotor 33 im aktivierten Zustand befindet.

Im Stromkreis 20 werden die Schaltstellungen des Betätigungsschalters 47, die elektrischen Spannungszustände in den elektrischen Leitungen 25, 27 und 29 zum Elektromotor 33 sowie die Stellungen beziehungsweise der Bewegungszustand des Elektromotors 33 ständig erfasst und diese Daten an die Steuerung 63 übermittelt.

In der praktischen Anwendung funktioniert der elektrische Stromkreis nach Figur 1 wie folgt.

Im Regelbetrieb wird durch Aktivierung des Betätigungsschalters 51 der Erregerstromkreis 49 geschlossen, wodurch die Magnetspule 37 des Schütz 35 erregt wird. Hierdurch wird der Zuganker 39 an die Magnetspule 37 angezogen und die Schalter 41, 43 und 45 schließen die Leitungen 25, 27 und 29 sowie der Schalter 47 den Hilfskontakt. Der Elektromotor 33 wird hierdurch eingeschaltet, indem dieser über die Leitungen 25, 27 und 29 mit elektrischem Strom aus dem Versorgungsnetzwerk 23 versorgt und hierdurch bewegt wird.

Angemerkt sei in diesem Zusammenhang, dass in Figur 1 ein Zustand dargestellt ist, bei dem die Leitungen 25, 27, 29 und 31 durch die Sicherungen 53 sowie den Fehlerstromschutzschalter 55 unterbrochen sind. Im Regelbetrieb sind die Leitungen 25, 27, 29 und 31 durch die Sicherungen 53 und den Fehlerstromschutzschalter 55 jedoch nicht unterbrochen.

Im Regelbetrieb wird durch Ausschalten beziehungsweise Inaktivierung des Betätigungsschalters 51 der Erregerstromkreis 49 unterbrochen, so dass der Schütz 35 die Stromversorgung zum Elektromotor 33 unterbricht und diesen hierdurch ausschaltet.

Im Fehlerbetrieb wird der Betätigungsschalter 51 inaktiviert, das Schütz 35 bleibt jedoch geschlossen, beispielsweise weil der Zuganker 39 oder die Schalter 41, 43 oder 45 klemmen beziehungsweise festgebrannt sind ("klemmender Schütz", "verschweißte Kontakte"). In diesem Fall bewegt sich der Elektromotor 33 weiter, obgleich sich der Betätigungsschalter 51 in der inaktivierten Stellung befindet. Dies führt zu einem äußerst gefährlichen Zustand, der auch durch weitere Schaltelemente im Stromkreis 20 nicht aufgehoben werden kann. Es ist daher zwingend erforderlich, den Leistungskreis zu unterbrechen um den Elektromotor 33 oder die durch diesen angetriebene Maschine in einen sicheren Zustand zu fahren.

Bei dem Ausführungsbeispiel nach Figur 1 der vorliegenden Erfindung erfolgt die Unterbrechung des Leistungskreises wie folgt:

Die Steuerung 63 empfängt zum einen Daten (Pfeil D47), wonach sich der Betätigungsschalter 52 im inaktivierten Zustand befindet.

Gleichzeitig empfängt die Steuerung 63 Daten, wonach an den Leitungen 25, 27 und 29 auf der Verbraucherseite des Schütz 35 elektrische Spannung anliegt (Pfeile D25, D27, D29) und wonach sich der Elektromotor 33 bewegt (Pfeil D33), sich der Elektromotor 33 also im aktivierten Zustand befindet.

Nachdem die Steuerung diese Daten ("Schütz 35 inaktiv" und "Elektromotor 33 aktiv") für mehr als 1 Sekunde gleichzeitig empfangen hat, sendet sie ein Signal 73 an das Relais 69 zum Schließen des Relaiskontaktes 71.

Durch die daraufhin geschlossene Ableitung 65 wird elektrischer Strom von der Leitung 25 über die Ableitung 65 an den Schutzleiter PE und damit aus dem elektrischen Stromkreis 20 abgeleitet. Der Widerstand 67 in der Ableitung 65 ist derart bemessen, dass der über die Ableitung 65 ableitbare Fehlerstrom über der Auslösestromstärke des Fehlerstromschutzschalters 55 liegt. Der Fehlerstromschutzschalter 55 registriert diese Stromdifferenz im elektrischen Stromkreis 20 entsprechend und löst daraufhin aus. Dadurch werden die Leitungen 25, 27, 29 und 31 durch den Fehlerstromschutzschalter 55 unterbrochen.

Durch die Unterbrechung der Leitungen 25, 27 und 29 wird die Stromzufuhr zum Elektromotor 33 unterbrochen, so dass sich dieser nicht weiter bewegt.

## Patentansprüche

1. Elektrischer Stromkreis (20) mit folgenden Merkmalen:
einem Fehlerstromschutzschalter (55);
einem elektrischen Verbraucher (33);
einem Schütz (35), durch den der elektrische Verbraucher (33) einschaltbar und ausschaltbar ist;
einer Ableitung (65), über die elektrischer Strom aus dem elektrischen Stromkreis (20) ableitbar ist;
einer Schalteinrichtung (69), durch die die Ableitung (65) schließbar und unterbrechbar ist, **dadurch gekennzeichnet, dass**
die Schalteinrichtung (69) in Abhängigkeit von den Zuständen des Schütz (35) sowie des elektrischen Verbrauchers (33) steuerbar ist.

2. Elektrischer Stromkreis nach Anspruch 1, bei dem die Zustände des Schütz (35) die Schaltstellungen des Betätigungsschalters (51) des Schütz (35) sind.

3. Elektrischer Stromkreis nach Anspruch 1, bei dem die Zustände des Schütz (35) die elektrischen Stromzustände im Erregerstromkreis (49) des Schütz (35) sind:

4. Elektrischer Stromkreis nach Anspruch 1; bei dem die Zustände des Schütz (35) die elektrischen Spannungszustände im Erregerstromkreis (49) des Schütz (35) sind.

5. Elektrischer Stromkreis nach Anspruch 1, bei dem die Zustände des Schütz (35) die elektrischen Spannungszustände an der Magnetspule (37) des Schütz (35) sind.

6. Elektrischer Stromkreis nach Anspruch 1, bei dem die Zustände des elektrischen Verbrauchers (33) die Stellungen des elektrischen Verbrauchers (33) sind.

7. Elektrischer Stromkreis nach Anspruch 1, bei dem die Zustände des elektrischen Verbrauchers (33) die elektrischen Stromzustände in den elektrischen Leitungen (25, 27, 29) zum elektrischen Verbraucher (33) oder im elektrischen Verbraucher (33) sind.

8. Elektrischer Stromkreis nach Anspruch 1, bei dem die Zustände des elektrischen Verbrauchers (33) die elektrischen Spannungszustände in den elektrischen Leitungen (25, 27, 29) zum elektrischen Verbraucher (33) oder im elektrischen Verbraucher (33) sind.

9. Elektrischer Stromkreis nach Anspruch 1, bei dem die Schalteinrichtung (69) derart steuerbar ist, dass sie die Ableitung (65) schließt, wenn sich der Schütz (35) im inaktivierten Zustand befindet und sich der elektrische Verbraucher (33) im aktivierten Zustand befindet.

10. Elektrischer Stromkreis nach Anspruch 1, bei dem die Schalteinrichtung (69) derart steuerbar ist, dass sie die Ableitung (65) schließt, wenn sich für einen festgelegten Zeitraum der Schütz (35) im inaktivierten Zustand und sich der elektrische Verbraucher (33) im aktivierten Zustand befinden.

11. Elektrischer Stromkreis nach Anspruch 1, bei dem die Schalteinrichtung (69) mittels einer Steuerung (63) steuerbar ist.

12. Elektrischer Stromkreis nach Anspruch 1, bei dem der elektrische Verbraucher (33) ein Elektromotor ist.

13. Elektrischer Stromkreis nach Anspruch 1, bei dem die Ableitung (65) auf Nullpotential liegt.

14. Elektrischer Stromkreis nach Anspruch 1, bei dem die Schalteinrichtung (69) ein Relais ist.

15. Elektrischer Stromkreis nach Anspruch 1, bei dem der Verbraucher (33) zum Antreiben einer Maschine dient.

## Claims

1. An electrical circuit (20) having the following features:
a residual current circuit breaker (55);
an electrical consumer (33);
a contactor (35), by which the electrical consumer (33) can be switched on and off;
a shunt (65), via which electrical current can be diverted from the electrical circuit (20);
a switchgear (69), with which the shunt (65) can be closed and interrupted, **characterised in that**
the switchgear (69) is controllable depending on the states of the contactor (35) and the electrical consumer (33).

2. The electrical circuit according to claim 1, in which the states of the contactor (35) are the switch settings of the actuating switch (51) of the contactor (35).

3. The electrical circuit according to claim 1, in which the states of the contactor (35) are the electrical current states in the exciter current circuit (49) of the contactor (35).

4. The electrical circuit according to claim 1, in which the states of the contactor (35) are the electrical voltage states in the exciter current circuit (49) of the contactor (35).

5. The electrical circuit according to claim 1, in which the states of the contactor (35) are the electrical voltage states at the magnetic coil (37) of the contactor (35).

6. The electrical circuit according to claim 1, in which the states of the electrical consumer (33) are the settings of the electrical consumer (33).

7. The electrical circuit according to claim 1, in which the states of the electrical consumer (33) are the electrical current states in the electrical lines (25, 27, 29) to the electrical consumer (33) or in the electrical consumer (33).

8. The electrical circuit according to claim 1, in which the states of the electrical consumer (33) are the electrical voltage states in the electrical lines (25, 27, 29) to the electrical consumer (33) or in the electrical consumer (33).

9. The electrical circuit according to claim 1, in which the switchgear (69) is controllable in such a manner that it closes the shunt (65) when the contactor (35) is in a deactivated state and the electrical consumer (33) is in an activated state.

10. The electrical circuit according to claim 1, in which the switchgear (69) is controllable in such a manner that it closes the shunt (65) when the contactor (35) is in a deactivated state and the electrical consumer (33) is in an activated state for a fixed period.

11. The electrical consumer according to claim 1, in which the switchgear (69) is controllable by means of a control unit (63).

12. The electrical circuit according to claim 1, in which the electrical consumer (33) is an electric motor.

13. The electrical circuit according to claim 1, in which the shunt (65) is at zero potential.

14. The electrical circuit according to claim 1, in which the switchgear (69) is a relay.

15. The electrical circuit according to claim 1, in which the consumer (33) is used to drive a machine.

## Revendications

1. Circuit électrique (20) présentant les caractéristiques suivantes :
un interrupteur de protection pour courant de défaut (55) ;
un consommateur électrique (33) ;
un contacteur (35), par lequel le consommateur électrique (33) peut être connecté et déconnecté ;
une dérivation (65), par laquelle du courant électrique peut être dévié du circuit électrique (20) ;
un dispositif de commutation (69), par lequel la dérivation (65) peut être fermée et interrompue, **caractérisé en ce que**
le dispositif de commutation (69) peut être commandé en fonction des états du contacteur (35) et du consommateur (33) électrique.

2. Circuit électrique selon la revendication 1, dans lequel les états du contacteur (35) sont les positions de commutation de l'interrupteur d'actionnement (51) du contacteur (35).

3. Circuit électrique selon la revendication 1, dans lequel les états du contacteur (35) sont les états de courant électriques dans le circuit excitateur (49) du contacteur (35).

4. Circuit électrique selon la revendication 1, dans lequel les états du contacteur (35) sont les états de tension électriques dans le circuit excitateur (49) du contacteur (35).

5. Circuit électrique selon la revendication 1, dans lequel les états du contacteur (35) sont les états de tension électriques sur la bobine magnétique (37) du contacteur (35).

6. Circuit électrique selon la revendication 1, dans lequel les états du consommateur (33) électrique sont les positions du consommateur (33) électrique.

7. Circuit électrique selon la revendication 1, dans lequel les états du consommateur (33) électrique sont les états de courant électriques dans les lignes électriques (25, 27, 29) allant au consommateur (33) électrique ou dans le consommateur (33) électrique.

8. Circuit électrique selon la revendication 1, dans lequel les états du consommateur (33) électrique sont les états de tension électriques dans les lignes (25, 27, 29) électriques allant au consommateur électrique (33) ou dans le consommateur (33) électrique.

9. Circuit électrique selon la revendication 1, sur lequel le dispositif de commutation (69) peut être commandé de telle sorte qu'il ferme la dérivation (65) lorsque le contacteur (35) se trouve dans l'état inactivé et le consommateur (33) électrique se trouve dans l'état activé.

10. Circuit électrique selon la revendication 1, sur lequel le dispositif de commutation (69) peut être commandé de telle sorte qu'il ferme la dérivation (65) lorsque le contacteur (35) se trouve dans l'état désactivé et le consommateur (33) électrique se trouve dans l'état activé pour une période fixée.

11. Circuit électrique selon la revendication 1, sur lequel le dispositif de commutation (69) peut être commandé au moyen d'une commande (63).

12. Circuit électrique selon la revendication 1, sur lequel le consommateur (33) électrique est un moteur électrique.

13. Circuit électrique selon la revendication 1, sur lequel la dérivation (65) se situe sur le potentiel zéro.

14. Circuit électrique selon la revendication 1, sur lequel le dispositif de commutation (69) est un relais.

15. Circuit électrique selon la revendication 1, sur lequel le consommateur (33) sert à l'entraînement d'une machine.
